# EUROPÄISCHE PATENTSCHRIFT

(11) **EP 3 158 181 B1**
(45) Veröffentlichungstag und Bekanntmachung des Hinweises auf die Patenterteilung: **24.04.2024**
(21) Anmeldenummer: 15729397.8
(22) Anmeldetag: 09.06.2015
(51) Int. Cl.: F02D 41/22, G05B 23/02, B61L 27/40, B61L 27/57, F02D 41/14, B61L 15/00, B61L 23/00

(54) **VERFAHREN ZUR ÜBERWACHUNG EINER FAHRZEUGSTEUERUNG**
METHOD FOR MONITORING A VEHICLE CONTROLLER
PROCÉDÉ DE SURVEILLANCE D'UNE COMMANDE DE VÉHICULE

(30) Priorität: 20.06.2014 DE 102014211896
(43) Veröffentlichungstag der Anmeldung: 26.04.2017
(73) Patentinhaber: Robert Bosch GmbH, 70442 Stuttgart (DE)
(72) Erfinder: WAIBLER, Markus, 70197 Stuttgart (DE); HACKNER, Michael, 73650 Winterbach (DE); SEPE, Nello, 72669 Unterensingen (DE); SOJKA, Juergen, 74321 Bietigheim-Bissingen (DE)
(86) Internationale Anmeldenummer: PCT/EP2015/062770
(87) Internationale Veröffentlichungsnummer: WO 2015/193141

(56) Entgegenhaltungen:
- EP-A2- 1 715 397
- EP-A2- 2 428 859
- WO-A2-2004/025223
- DE-A1- 3 115 404
- FR-A1- 2 864 162
- US-A1- 2010 042 287

## Beschreibung

### Stand der Technik

Es sind verschiedene Lern-/Regel- und Korrekturfunktionen bekannt, welche in Kraftfahrzeugen die Funktion von Systemen und Komponenten während der Fahrt überwachen und bei einer Abweichung korrigierend eingreifen. So ist z.B. aus der DE 431 9677 ein Verfahren einer Vorrichtung zur Regelung der Laufruhe einer Brennkraftmaschine bekannt. Bei der dortigen Vorrichtung ist jedem Zylinder der Brennkraftmaschine eine Regelung zugeordnet, die abhängig von einer ihr zugeordneten Regelabweichung eine Stellgröße für den ihr zugeordneten Regler bildet. Die Regelabweichung ergibt sich aus den einzelnen Zylinder zugeordneten Istwerten und Sollwerten.

Mit einem solchen Verfahren können Fertigungstoleranzen sowie Laufzeitveränderungen im Fahrzeug ausgeglichen werden. Dadurch werden Fertigungskosten niedrig gehalten und der Fahrkomfort wird verbessert. Diese Funktionen sind in der Regel Bestandteil der Systemsoftware und werden somit durch den Fahrzeughersteller in Fahrzeugsteuergeräten vor dem Produktionsstart implementiert. Im Servicefall können die Korrekturwerte der Lern-/Regel- und Korrekturfunktionen zur werkstattbasierten Diagnose von Systemen oder Komponenten des Fahrzeugs verwendet werden.

Aus dem Dokument EP 1 715 397 A2 ist ein Verfahren zum Vorhersagen der verbleibenden Betriebslebensdauer einer Komponente bekannt.

Das Dokument US 2010/042287 A1 zeigt ein System und Verfahren zum Bereitstellen einer proaktiven Fahrzeugsystemverwaltung und -wartung unter Verwendung von diagnostischen und prognostischen Informationen, wobei Fahrzeuginformationen von Fahrzeugsensoren und/oder Subsystemen durch ein Bordmodul am Fahrzeug und/oder an einer entfernten Einrichtung gesammelt werden. Das Dokument FR 2864 162 A1 beschreibt ein Verfahren, welches das Bereitstellen eines Korrekturwerts an einer Überwachungseinheit unter Verwendung einer Schnittstelle und das Korrigieren eines tatsächlichen Werts mit dem Korrekturwert unter Verwendung einer Korrektureinheit umfasst. Daneben sind Telematikanwendungen bekannt, die eine kontinuierliche oder diskontinuierliche Datenübertragung vom Fahrzeug zum Fahrzeughersteller oder seiner Serviceorganisation oder Dritten ermöglicht.

Überschreiten bei den bekannten Lern-/Regel- und Korrekturfunktionen die ermittelten Korrekturwerte einen bestimmten Wert, so werden geeignete Maßnahmen eingeleitet. Üblicherweise reagieren die bekannten Funktionen erst dann, wenn Emissionsgrenzwerte oder Regelgrenzen überschritten sind. Dabei handelt es sich um eine reaktive Diagnose, d.h. der Fahrzeuglenker bemerkt ein Symptom in Form einer Warnlampe oder als Ersatzreaktion wie ein Notlauf oder gar ein Fahrzeugausfall und ist von dem Ereignis in der Regel überrascht.

Im gewerblichen Umfeld treten bei dieser Art Fahrzeugausfall sehr häufig hohe Folgekosten auf. Dies ist beispielsweise bei Baufahrzeugen oder Minenfahrzeugen der Fall.

Das erfindungsgemäße Verfahren mit den Merkmalen des unabhängigen Anspruchs hat dem gegenüber den Vorteil, dass durch eine rechtzeitige Warnung ein ungeplanter Ausfall des Fahrzeugs vermieden werden kann. Insbesondere wird der Fahrer oder der Fahrzeugbetreiber rechtzeitig gewarnt und er kann entsprechende Maßnahmen rechtzeitig ergreifen.

Erfindungsgemäß werden mittels einer Korrekturfunktion Korrekturwerte ermittelt. Der Verlauf der Korrekturwerte wird aufgezeichnet und der Verlauf der Korrekturwerte extrapoliert. Ausgehend von den extrapolierten Korrekturwerten wird ein Fehler prognostiziert. Zur Extrapolation können beliebige Verfahren eingesetzt werden. Vorzugsweise wird eine Geraden-Extrapolation verwendet.

Erfindungsgemäß wird ermittelt, wann ein Fehler voraussichtlich auftritt. Diese bedeutet, dem Fahrer oder dem Betreiber wird signalisiert wann voraussichtlich der Fehler auftritt. Dabei kann vorgesehen sein, dass die verbleibende Fahrstrecke und/oder die verbleibende Zeit bis der Fehler auftritt angezeigt wird.

Erfindungsgemäß wird signalisiert, wann die extrapolierten Korrekturwerte einen Schwellenwert voraussichtlich übersteigen. Das Überschreiten des Schwellenwerts wird Steuergerät beim Stand der Technik überprüft. Bei Überschreiten des Schwellenwerts wird bisher dem Fahrer ein Fehler signalisiert und geeignete Maßnahmen eingeleitet. Dadurch, dass überprüft wird, wann der extrapolierte Korrekturwert den Schwellenwert übersteigt, kann schon vorab erkannt werden wann der Fehler voraussichtlich auftritt.

Vorteilhaft ist es, wenn eine bestimmte Zeitdauer vor Erreichen des Schwellenwertes dies gemeldet wird. Dies bedeutet, dass dem Fahrer oder dem Betreiber eine bestimmte Zeitdauer A vor dem Überschreiten des Schwellenwerts eine entsprechende Meldung übermittelt wird. Vorzugsweise ist diese Zeitdauer A so gewählt, dass Sie länger als ein Wartungsintervall ist. Auch kann vorgesehen sein, dass diese Zeitdauer A so bemessen ist, dass noch eine Werkstatt erreicht werden kann. Insbesondere bei Fahrzeugen, die regelmäßig die gleiche Strecke fahren, ist diese Zeit so bemessen, dass diese eine Werkstätte erreichen. Dies ist insbesondere bei Linienbussen, Fahrzeugen einer Spedition oder Fahrzeugen, die in Minen, Bergwerken oder Steinbrüchen eingesetzt werden von Vorteil.

Ist die durchschnittliche Fahrstrecke pro Zeit bekannt, so kann an Stelle der Zeitdauer eine Fahrstrecke verwendet werden. Dies ist insbesondere bei Fahrzeugen sinnvoll die immer die gleiche oder eine ähnliche Fahrstrecke bewältigen oder sich innerhalb einer bestimmten Fahrstrecke um eine Servicestadion bewegen.

Dadurch, dass der Verlauf der Korrekturwerte erst dann extrapoliert wird, wenn die Korrekturwerte Werte außerhalb eines zulässigen Bereichs annehmen, kann der Aufwand im Steuergerät verringert werden. Ferner wird die Genauigkeit der Extrapolation verbessert, wenn die Korrekturwerte bereits signifikant angestiegen sind.

Erfindungsgemäß wird das Verfahren zumindest teilweise außerhalb des Fahrzeugs in einer "Cloud" durchgeführt. Dies ist dann besonders vorteilhaft, wenn mehrere Fahrzeuge überwacht werden. Dies ist beispielsweise bei einem Fuhrpark eines Busunternehmens oder eine Spedition der Fall. Ferner ist dies vorteilhaft, wenn mehrere Fahrzeuge eines Unternehmens überwacht werden, das einen Steinbruch oder eine Mine betreibt. In diesen Fällen wird ein zukünftiger Fehler nicht oder nicht nur dem Fahrer angezeigt, sondern der zukünftige Fehler wird auch dem Betreiber der Fahrzeuge angezeigt. Dadurch kann gewährleistet werden, dass es nicht zu unerwarteten Ausfällen der Fahrzeuge kommt und dass diese rechtzeitig der Wartung zugeführt werden.

### Zeichnung

Ausführungsbeispiel der Erfindung sind in den Zeichnungen dargestellt und in den nachfolgenden Beschreibung näher erläutert. Es zeigen
Figur 1 eine schematische Darstellung,
Figur 2 den zeitlichen Verlauf der Merkmale und
Figur 3 ein Flussdiagramm.

### Beschreibung der Ausführungsbeispiele

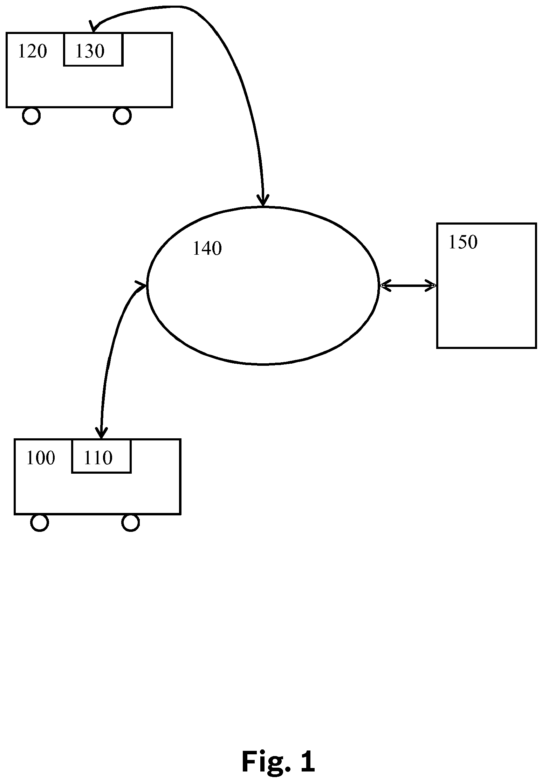

In der Figur 1 ist eine Vorrichtung zur Überwachung einer Fahrzeugsteuerung gezeigt. Ein erstes Fahrzeug ist mit 100 bezeichnet. Dieses umfasst in der Regel ein Steuergerät 110. Desweiteren können weitere Fahrzeuge 120 vorgesehen sein, die ebenfalls ein Steuergerät 130 umfassen können. Dieses Fahrzeug 120 bzw. das Steuergerät 110 übermittelt die Daten an eine Zentraleinheit 140. Diese führt verschiedene Berechnungen durch und tauscht Daten mit einem Anzeigemittel 150 aus.

Diese Zentraleinheit kann auch als "Cloud" bezeichnet werden. Hierbei handelt es sich um verschiedene Speicher und verschiedene Rechner, die dezentral oder zentral positioniert sind. So kann beispielsweise vorgesehen sein, dass ein Dienstleister diesen Speicherplatz und die Rechnerkapazität anbietet und die Berechnungen beim Dienstleister durchgeführt werden. Die Anzeigemittel 150 sind vorzugsweise beim Fahrzeugbesitzer bzw. beim Fahrzeugbetreiber angesiedelt. Beispielsweise kann vorgesehen sein, dass bei einer Spedition diese Daten zentral über einen Rechner abrufbar sind und entsprechende Personen Zugriff auf diese Daten haben.

Im Rahmen der Steuerung eines Fahrzeugs werden verschiedene Korrekturdaten erfasst. So ist es beispielsweise aus dem angegebenen Stand der Technik bekannt, die Korrekturwerte einer sogenannten Laufruheregelung zu ermitteln. Ferner sind moderne Motorsteuergeräte mit einer sogenannten Nullmengenkalibrierung ausgestattet. Diese Nullmengenkalibrierung ermittelt die Korrektur-Ansteuerdauer ab der momentwirksam Kraftstoff eingespritzt wird. Das erfindungsgemäße Verfahren kann auf alle diese Verfahren und weitere Verfahren, die bei der Motorsteuerung eingesetzt werden, oder die bei anderen Steuerungen in der Brennkraftmaschine eingesetzt werden, verwendet werden.

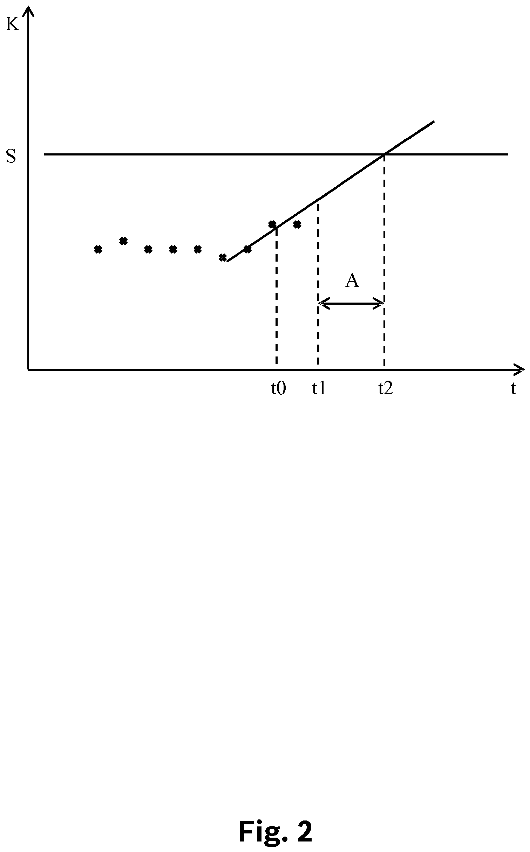

In Figur 2 sind die Korrekturwerte K über der Zeit t aufgetragen. Desweiteren ist ein Schwellwert mit S bezeichnet. Bis zu einem Zeitpunkt t0 nehmen die Korrekturwerte K einen nahezu kontanten Wert an. Die Korrekturwerte schwanken lediglich von Messung zu Messung im Rahmen einer gewissen Toleranzbreite. Ab dem Zeitpunkt t0 ist zu erkennen, dass die Korrekturwerte langsam ansteigen. Durch diese ansteigenden Werte kann eine Gerade gelegt werden bzw. es kann mit anderen Verfahren eine Extrapolationskurve aufgetragen werden. Zum Zeitpunkt t2 schneidet diese Extrapolationskurve den Schwellenwert S. Ausgehend von diesem Zeitpunkt t2 wird ein Zeitpunkt t1 bestimmt, der um eine Zeitspanne A vor dem Zeitpunkt t2 liegt. Zum Zeitpunkt t1 wird eine Warnung ausgegeben. Diese Zeitspanne A ist vorzugsweise so bemessen, dass sie der Zeitspanne entspricht, in der üblicherweise eine Wartung des Fahrzeugs erfolgt. D.h. die Zeitdauer A entspricht dem Wartungsintervall des Fahrzeugs.

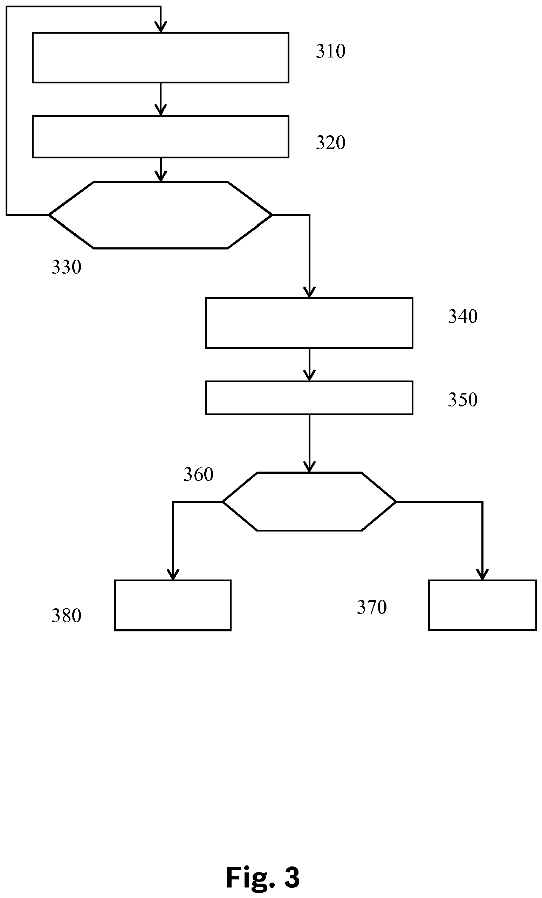

Im Folgenden wird das erfindungsgemäße Verfahren am Beispiel der Figur 3 beschrieben. In einem ersten Schritt 310 werden die Korrekturwerte ermittelt. In einem Schritt 320 werden die Korrekturwerte in einem Speicher abgelegt. In einem Schritt 330 wird überprüft, ob die Korrekturwerte innerhalb einer Brandbreite streuen. Ist dies der Fall, so setzt das Programm mit Schritt 310 fort und es werden neue Korrekturwerte ermittelt. Ist die Streuung der Korrekturwerte größer als die Bandbreite, erfolgt in Schritt 340 eine dynamische Berechnung von Extrapolationswerten. Im einfachsten Fall erfolgt diese mittels einer Geraden-Extrapolation. Es sind aber auch beliebige andere mathematische Extrapolationsalgorithmen verwendbar. In Schritt 350 wird der Schnittpunkt der Extrapolationsfunktion mit dem zulässigen Grenzwert S berechnet. Als zulässige Grenzwerte S können applizierte Diagnosegrenzwerte, physikalische Regelgrenzwerte der Korrekturfunktion oder andere Grenzwerte sein. Die Abfrage 360 überprüft, wann der Schnittpunkt erreicht wird. Abhängig vom Ergebniss der Abfrage 360 wird in Schritt 370 eine Fehlermeldung ausgegeben oder es wird in Schritt 380 signalisiert, dass das Fahrzeug in einer bestimmten Zeit oder Fahrleistung ausfällt.

Erfindungsgemäß wird das beschrieben Verfahren zumindest teilweise in einer sog. "Cloud" durchgeführt.

Die Erfassung der Korrekturwerte in Schritt 310 erfolgt in dem Steuergerät 110 des Fahrzeugs 100. Diese Korrekturwerte werden dann über eine Telematikeinheit übertragen. Hierzu kann eine bereits vorhandene Lkw-Telematikbox, eine Connectivity Control Unit mit eigener Logik oder ein GSM-Modul im Steuergerät als Telematikeinheit verwendet werden. Die Korrekturwerte können im Fahrzeug vorverarbeitet und/oder zwischengespeichert werden. In der Zentraleinheit 140 werden die Korrekturwerte auf einen Server übertragen und vorzugsweise in einer Datenbank gespeichert. Von dort aus gelangen die Daten auf eine beliebige Hardware, von der die obigen Verfahrensschritte abgearbeitet werden. Die Ergebnisse werden dann dem Nutzer bzw. dem Betreiber des Fahrzeugs geeignet angezeigt.

Alternativ kann auch vorgesehen sein, dass auch die Extrapolation im Steuergerät 110 erfolgt und lediglich die Daten, wenn der Schwellenwert überschritten wird an die Zentraleinheit übertragen wird.

Wesentlich für die Anwendung der erfindungsgemäßen Vorgehensweise sind Lern-/Regel- und Korrekturfunktionen. Sind diese nicht im Steuergerät 130 implementiert und/oder aktiviert, so ist bei einer Ausgestaltung vorgesehen, dass diese Funktionen nur intervallweise überwachend, aber nicht regelnd auch auf der Zentraleinheit 140, d.h. in der "Cloud", ablaufen zu lassen. Dazu werden lediglich alle für die Lern-/Regel- und Korrekturfunktionen notwendigen Eingangssignale in die Zentraleinheit 140 übertragen werden.

## Patentansprüche

1. Verfahren zur Überwachung einer Fahrzeugsteuerung, wobei der Verlauf der Werte eines Diagnoseparameters eines Fahrzeuges aufgezeichnet wird, wobei der Verlauf der Werte extrapoliert wird, und wobei ausgehend von den extrapolierten Werten ein Fehler prognostiziert wird, wobei ermittelt wird, wann ein Fehler voraussichtlich auftritt, wobei signalisiert wird, wann die extrapolierten Werte einen Schwellenwert übersteigen; **dadurch gekennzeichnet, dass** das Verfahren zumindest teilweise außerhalb des Fahrzeugs in einer Zentraleinheit (140) durchgeführt wird, und dass als Diagnoseparameter Korrekturwerte einer Korrekturfunktion verwendet werden, die Abweichungen zwischen Istwerten und Sollwerten eines Reglers korrigieren.

2. Verfahren nach Anspruch 1, wobei eine bestimmte Zeit vor Erreichen des Schwellenwertes dies gemeldet wird.

3. Verfahren nach Anspruch 1, wobei der Verlauf der Korrekturwerte extrapoliert wird, wenn die Korrekturwerte Werte außerhalb eines zulässigen Bereichs annehmen.

## Claims

1. Method for monitoring a vehicle controller, wherein the curve of the values of a diagnosis parameter of a vehicle is plotted, wherein the curve of the values is extrapolated, and wherein the extrapolated values are used as a basis for predicting a fault, wherein it is determined when a fault is likely to occur, wherein it is signalled when the extrapolated values exceed a threshold value; **characterized in that** the method is carried out at least partly outside the vehicle in a central unit (140), and **in that** the diagnosis parameters used are correction values of a correction function which correct differences between actual values and setpoint values of a controller.

2. Method according to Claim 1, wherein this is reported a certain time before reaching the threshold value.

3. Method according to Claim 1, wherein the curve of the correction values is extrapolated if the correction values assume values outside a permissible range.

## Revendications

1. Procédé de surveillance d'une commande de véhicule, l'évolution des valeurs d'un paramètre de diagnostic d'un véhicule étant enregistrée, l'évolution des valeurs étant extrapolée et, à partir des valeurs extrapolées, une erreur étant pronostiquée, le moment auquel une erreur est susceptible de se produire étant déterminé, le moment auquel les valeurs extrapolées dépassent une valeur de seuil étant signalé ; **caractérisé en ce que** le procédé est mis en œuvre au moins partiellement à l'extérieur du véhicule dans une unité centrale (140), et **en ce que** les paramètres de diagnostic utilisés sont des valeurs de correction d'une fonction de correction qui corrigent les écarts entre les valeurs réelles et les valeurs de consigne d'un régulateur.

2. Procédé selon la revendication 1, l'atteinte de la valeur de seuil étant signalée un certain temps avant qu'elle ne se produise.

3. Procédé selon la revendication 1, l'évolution des valeurs de correction étant extrapolée lorsque les valeurs de correction prennent des valeurs en dehors d'une plage admissible.
